## Europäisches Patentamt
## European Patent Office
## Office européen des brevets

(11) Veröffentlichungsnummer: **0 204 962**
**B1**

(12) **EUROPÄISCHE PATENTSCHRIFT**

(45) Veröffentlichungstag der Patentschrift: **19.09.90**

(51) Int. Cl.⁵: **C 04 B 35/50, H 01 J 1/14**

(21) Anmeldenummer: **86106236.2**

(22) Anmeldetag: **07.05.86**

(54) Polykristalline Sinterkörper auf Basis von Lanthanhexaborid und Verfahren zu ihrer Herstellung.

(30) Priorität: **10.05.85 DE 3516955**

(43) Veröffentlichungstag der Anmeldung:
**17.12.86 Patentblatt 86/51**

(45) Bekanntmachung des Hinweises auf die
Patenterteilung:
**19.09.90 Patentblatt 90/38**

(84) Benannte Vertragsstaaten:
**AT BE CH DE FR GB IT LI NL SE**

(56) Entgegenhaltungen:
EP-A-0 116 851
GB-A-2 027 984
US-A-4 261 753

CHEMICAL ABSTRACTS, Band 83, Nr. 6, 11.
August 1975, Seite 591, Zusammenfassung Nr.
52030t, Columbus, Ohio, US; & JP - A - 75 10 551
(SCIENCE AND TECHNOLOGY NATIONAL
INSTITUTE FOR RESEARCH IN INORGANIC
MATERIALS) 03-02-1975

(73) Patentinhaber: **Elektroschmelzwerk Kempten
GmbH
Herzog-Wilhelm-Strasse 16
D-8000 München 2 (DE)**

(72) Erfinder: **Knoch, Heinrich Dr.-Ing.
Zirbenweg 28
D-8963 Waltenhofen-Lanzen (DE)**
Erfinder: **Bechler, Eckhart, DI (FH)
Kleiner Kornhausplatz 3
D-8960 Kempten (DE)**
Erfinder: **Lipp, Alfred Dipl.-Chem.
Bürgermeister-Singer-Strasse 15
D-8939 Bad Wörishofen (DE)**

(56) Entgegenhaltungen:

CHEMICAL ABSTRACTS, Band 84, Nr. 26, 28.
Juni 1976, Seite 255, Zusammenfassung Nr.
184141k, Columbus, Ohio, US; & JP - A - 76 20
205 (DENKI KAGAKU KOGYO K.K.) 18-02-1976

CHEMICAL ABSTRACTS, Band 68, Nr. 22, Mai
1968, Seite 9635, Zusammenfassung Nr. 99668n,
Columbus, Ohio, US; G.A. KUDINTSEVA et al.:
"Preparation and emission properties of
sintered cathodes from pure lanthanum
hexaboride", & IZV. AKAD. NAUK SSSR,
NEORG. MATER. 4(1), 49-53(1968)

**Beschreibung**

Es ist bekannt, daß Lanthanhexaborid aufgrund seiner guten thermischen Emissionseigenschaften als Werkstoff für Emissionskathoden mit hoher elektronischer Leistung besondere Bedeutung zukommt. Durch die rasche Entwicklung auf dem Gebiet der elektronischen Technik besteht deshalb eine zunehmende Nachfrage nach dichten Formkörpern auf Basis von Lanthanhexaborid.

Dichte Formkörper können überlicherweise nach dem sogenannten Heißpressverfahren hergestellt werden. Im Falle von Lanthanhexaborid können jedoch Verunreinigungen durch Reaktion mit dem Kohlenstoff aus den hierfür verwendeten Graphitpressformen nicht ausgeschlossen werden. Derartige Kohlenstoffverbindungen sind aber feuchtigkeitsempfindlich und die Ursache für das Brüchigwerden der durch Heißpressen hergestellten Lanthanhexaboridformkörper.

Um diese Schwierigkeiten zu vermeiden, wurde daher bereits Ende der Sechziger Jahre die Anwendung der drucklosen Sintertechnik für die Herstellung von selbstgebundenen Lanthanhexaboridformkörpern von russischen Autoren untersucht. Eine zusammenfassende Darstellung der hiermit erzielten Ergebnisse wird von H. Pastor in dem Buch "Boron and Refractory Borides", Ed. V.I. Matkovich, Springer-Verlag Berlin-Heidelberg-New York 1977, Seite 463 bis 466 gegeben.

Wie hieraus ersichtlich, wurden bei Einsatz von relativ grobkörnigen Lanthanhexaboridpulvern (Teilchengrößen im Bereich von <2,8 µm bis >6,4 µm durch Sintern von kleinen Probestücken unter Vakuum bei 2400°C Dichten bis zu 82% der theoretisch möglichen Dichte erreicht (im folgenden als % TD abgekürzt), wobei jedoch ein beträchtliches Kornwachstum auftrat (250 bis 300 µm), sowie erhebliche Gewichtsverluste durch Verdampfen (bis zu 15 Gew.-%). Durch Einbetten der zu sinternden Proben in Lanthanhexaboridpulver Konnten die Gewichtsverluste verringert werden (<5 Gew.-%).

Bei Einsatz von sehr feinen Lanthanhexaboridpulvern (Teilchengrößen <1 µm) wurden durch Sintern unter Argon bei 2000° bis 2450°C oder unter Wasserstoff bei 1800° bis 2200°C Dichten nahe dem theoretischen Wert erreicht. Beim Sintern unter Wasserstoff trat jedoch das größte Kornwachstum auf. So wurden beispielsweise nach 2 Stunden Sintern bei 2200°C folgende Korngrößen im fertigen Sinterkörper gebildet: 20 bis 25 µm unter Vakuum, 60 µm unter Argon und 150 µm unter $H_2$. Außerdem wurde nachgewiesen, daß bei Einsatz von technischen Lanthanhexaboridpulvern aufgrund des Verdampfens der Verunreinigungen die Verdichtung während des Sintervorgangs behindert wird.

Durch druckloses Sintern hergestellte selbstgebundene Lanthanhexaboridformkörper hatten demnach entweder keine ausreichend hohe Dichte oder hatten eine unregelmäßige Dichtverteilung, wobei erschwerend hinzukommt, daß während des Sintervorgangs hohe Gewichtsverluste auftraten, die durch Einbetten in Lanthanhexaboridpulver zwar vermindert, aber nicht verhindert werden konnten. Durch Verwendung eines Gemisches aus Lanthanhexaboridpulver und -granulat als Einbettmaterial soll zumindest das Verkleben von Einbettmaterial und Sinterkörper vermeiden werden können.

Da aber bekannt ist, daß Porosität oder unregelmäßige Dichteverteilung die thermoemissiven Eigenschaften von Lanthanhexaborid beeinträchtigt, wurde auch bereits versucht das Sinterverhalten der $LaB_6$-Pulver durch geringe Zusätze von Nickel oder Iridium zu verbessern. Durch das auf diese Weise im Formkörper vorhandene Nickelborid wird jedoch die Verdampfungsrate unter Einsatzbedingungen erhöht.

Für die Verwendung als Kathodenmaterial sind ferner keramische Mischwerkstoffe aus Borcarbid mit 10 bis 70 Volum-% Lanthanhexaborid bekannt geworden, die durch druckloses Sintern der Pulvergemische bei 2040°C hergestellt werden können. Da die Strahlungsleistung dieser Mischwerkstoffe in linearer Weise vom $LaB_6$-Gehalt abhängt, kann hiermit jedoch die hohe Strahlungsleistung von reinem $LaB_6$ nicht voll ausgenutzt werden (vgl. US—A 4 265 666).

Von Yu. B. Paderno und Mitarbeiten in Inst. of Mat. Science, Acad. of Sciences of the Ukr. SSR, translated from Poroshkovaya Metallurgiya 220 (1981), S. 56—60 wird auf die Zersetzung von gesinterten Formteilen aus $LaB_6$ aufmerksam gemacht, die darauf zurückzuführen ist, daß für die Herstellung dieser Formkörper Lanthanhexaboridpulver von technischer Reinheit verwendet worden sind. Durch die mit diesen Pulvern eingebrachten oder daraus während des Sinterns bei 1800° bis 1900°C gebildeten Verunreinigungen sind in den Sinterkörpern fremde Phasen vorhanden, die bei der Lagerung bei Raumtemperatur leicht hydrolysieren. Unter diesen fremden Phasen sind insbesondere Kohlenstoff enthaltende Lanthanverbindungen, wie Carbide und Borocarbide oder Sauerstoff enthaltende Verbindungen, wie Lanthan- und Boroxide und Borate zu verstehen. Aufgrund der hygroskopischen Natur von Boroxiden und insbesondere Lanthanoxiden, die in derartigen gesinterten Formteilen durch Röntgenbeugungsbilder nachgewiesen wurden, zerbrechen diese $LaB_6$-Formkörper und zerfallen.

Nach den bisher bekannten Verfahren war es offensichtlich nicht möglich, polykristalline Sinterkörper mit hohem $LaB_6$-Gehalt herzustellen, die sowohl eine ausreichend hohe Dichte, das heißt geringe Porosität, als auch ein einheitliches feinkörniges Mikrogefüge haben und die frei von solchen fremden Phasen sind, welche die Lagerbeständigkeit der Sinterkörper bei Raumtemperatur beeinträchtigen oder die Verdampfungsrate unter den Einsatzbedingungen als Kathodenmaterial in unerwünschter Weise erhöhen.

Es stellt sich somit die Aufgabe, derartige Formkörper zur Verfügung zu stellen, die darüberhinaus in vereinfachter Weise durch drucklose Sinterung hergestellt werden können, ohne daß hierzu die Einbettung in ein Lanthanhexaboridpulvermaterial erforderlich ist und als Ausgangsmaterial Lanthanhexaboridpulver von technischer Reinheit verwendet werden können.

Diese Aufgabe wird erfindungsgemäß durch polykristalline Sinterkörper auf Basis von Lanthanhexa-

EP 0 204 962 B1

borid mit einer Dichte von mindestens 95% der theoretisch möglich Dichte gelöst, die aus Lanthanhexaborid, Borcarbid und amorphem Kohlenstoff bestehen, wobei der Anteil von $B_4C+C$ 0,1 bis Gew.-% und die Gesamtsumme von La+B+C mindestens 99,0 Gew.-%, jeweils bezogen auf das Gesamtgewicht, beträgt. Die Sinterkörper haben ein homogenes Mikrogefüge mit mittleren Korngrößen von <10 μm, in dem neben der kristallinen Lanthanhexaboridphase Borcarbid und Kohlenstoff als getrennte, feinverteilte Phasen nachweisbar sind.

Die erfindungsgemäßen Sinterkörper werden aus Pulvergemischen bestehend aus Lanthanhexaborid und Zusätzen von Gemischen aus einem Kohlenstoff enthaltendem Material und einer Borkomponente durch drucklose Sinterung insbesondere bei Temperaturen von 2150° bis 2200°C hergestellt.

Als Ausgangsmaterial für die Pulvergemische werden vorteilhaft relativ feinkörnige Lanthanhexaboridpulver mit maximalen Teilchengrößen von 3 μm und feiner verwendet. Die Reinheit der Lanthanhexaboridpulver spielt keine entschiedene Rolle, das heißt es können sowohl hochreine Pulver, als auch solche mit technischem Reinheitsgrad eingesetzt werden, was insbesondere für die Massenproduktion sehr wirtschaftlich ist, da aufwendige Verfahren für die Pulverreinigung überflüssig sind.

Als Kohlenstoff enthaltendes Material kann Kohlenstoff per se, z.B. partikulärer Ruß, wie Acetylenruß mit einer spezifischen Oberfläche im Bereich von 10 bis 400 $m^2/g$ (gemessen nach BET) verwendet werden. Vorzugsweise wird jedoch ein organisches Material eingesetzt, das bei Temperaturen bis zu etwa 1000°C unter Bildung von Kohlenstoff verkokt werden kann. Beispiele hierfür sind Phenoplaste und Steinkohlenteerpech, wobei sich Phenol-Formaldehyd-Kondensationsprodukte vom Typ der Novolake und Resole besonders bewährt haben, die im Bereich von 100° bis 900°C unter Bildung von amorphem Kohlenstoff in etwa 35 bis 50%-iger Ausbeute zersetzt werden.

Als Borkomponente können amorphes Bor oder Borcarbid oder Gemische hiervon verwendet werden, wobei sich amorphes Bor besonders bewährt hat.

Die Mengen des Kohlenstoff enthaltenden Materials und der Borkomponente werden dabei vorteilhaft so bemessen, daß etwa gleiche Gewichtsmengen im Bereich von jeweils 0,25 bis 5 Gew.-%, berechnet als freier Kohlenstoff und als freies Bor, bezogen auf eingesetztes Lanthanhexaboridpulver, zur Verfügung stehen. Durch diesen Überschuß an Kohlenstoff, der bis zum dreifachen des Kohlenstoffgehalts in einer äquivalenten Borcarbidmenge betragen kann, ist es möglich, auch Lanthanhexaboridpulver, die durch das Aufmahlen auf die erforderliche Teilchengröße von 3 μm und feiner, einen Sauerstoffgehalt von bis zu etwa 5 Gew.-% aufweisen können, als Ausgangsmaterial ohne zusätzliche Reinigungsmaßnahmen zu verwenden.

Für die Herstellung der erfindungsgemäßen Sinterkörper durch drucklose Sinterung werden die Ausgangsmaterialien homogen vermischt und dann unter Bildung von Gründkörpern vorgeformt. Für das homogene Vermischen kann der Kohlenstoffzusatz in Form des organischen Materials in einem Lösungsmittel gelöst und das Gemenge aus Lanthanhexaboridpulver und der Borkomponente in der Lösung dispergiert werden. Bei Einsatz von freiem Kohlenstoff per se werden Lanthanhexaborid und Borkomponente gemeinsam mit dem elementaren Kohlenstoff in einer Lösung eines temporären Bindemittels und/oder Gleitmittels dispergiert. Als organische Lösungsmittel können beispielsweise Aceton oder niedere aliphatische Akohole mit 1 bis 6 C-Atomen Verwendung finden. Das Dispergieren kann durch mechanische Bewegung einer dünnflüssigen Suspension in Plastikbehältern oder durch Kneten einer dickflüssigen Suspension in einer Knetvorrichtung vorgenommen werden. Dann wird das Lösungsmittel entfernt, beispielsweise bei einer dünnflüssigen Suspension durch Sprühtrocknung oder bei einer dickflüssigen Suspension durch Abdunsten während des Knetvorgangs. Anschließend erfolgt die Fromgebung unter Bildung der Grünkörper. Die Formgebung kann durch übliche bekannte Maßnahmen, beispielsweise durch Gesenkpressen oder isostatisches Pressen bei Raumtemperatur oder erhöhter Temperatur vorgenommen werden, wobei üblicherweise ein Druck von 30 bis 600 MPa, vorzugsweise von 100 bis 500 MPa angewendet wird. Nach der Formgebung sollten die Grünkörper eine theoretische Dichte von mindestens 50%, vorzugsweise mindestens 60%, bezogen auf die theoretisch mögliche Dichte des Gemisches, aufweisen. Die vorgeformten Grünkörper werden dann in einem beliebigen Sinterofen unter Vakuum oder in Gegenwart einer inerten Gasatmosphäre unter einem Druck von 0,1 MPa auf die Temperaturen von 2150° bis 2200°C erhitzt. Die Haltezeit bei diesen Temperaturen ist in erster Linie von der Größe der zu sinternden Formkörper abhängig. Haltezeiten von etwa 5 bis 60 Minuten sind hierfür im allgemeinen ausreichend. Temperaturen von 2200°C sollten nicht überschritten werden, um ein übermäßiges Kornwachstum zu vermeiden. Bei Einsatz des Kohlenstoffs in Form eines organischen Materials wird dieses während des Aufheizvorganges verkokt, sodaß bei Beginn des eigentlichen Sintervorgangs der Kohlenstoff in freier Form vorliegt.

Als inerte Gasatmosphäre hat sich hierbei eine Edelgasatmosphäre, wie Argon bewährt. Unter dem Druck ist hierbei Normaldruck zu verstehen, der üblicherweise in der Größenordnung von 0,1 MPa liegt.

Unter den oben genannten Bedingungen werden bei Einsatz von Gemischen aus Kohlenstoff und amorphem Bor in gleichen Gewichtsmengen, vorzugsweise von jeweils 2 bis 4 Gew.-%, bezogen auf eingesetztes Lanthanhexaboridpulver, Sinterdichten von >95%, vorzugsweise >98% TD erreicht.

In den so hergestellten Sinterkörpern sind heben Lanthanhexaborid Borcarbid und freier Kohlenstoff analytisch nachweisbar. Die Sinterkörper sind stabil und unempfindlich gegen Luftfeuchtigkeit. Auch bei Einsatz von Lanthanhexaboridausgangspulvern mit technischem Reinheitsgrad, das heißt mit einem Sauerstoffgehalt von mehr als 1 Gew.-% wurden offensichtlich keine hydrolyseempfindlichen Begleit-

3

phasen gebildet, die bei Einsatz derartiger Pulver ohne den sinterfördernden Zusatz aus Kohlenstoff und Bor für die Zersetzung der gesinterten Lanthanhexaboridformkörper verantwortlich gemacht wurden.

Desgleichen waren bei der Durchführung der drucklosen Sinterung mit dem sinterfördernden Zusatz aus Kohlenstoff und Bor unter den angegebenen Bedingungen praktisch keine Lanthanhexaboridgewichtsverluste zu beobachten, obwohl die Sinterung im Vakuum und ohne Lanthanhexaboridpulvereinbettung durchgeführt wurde.

Die erfindungsgemäßen Sinterkörper haben ein homogenes Mikrogefüge mit mittleren Korngrößen von <10 µm, das heißt, daß während des Sintervorgangs nur ein geringes Kornwachstum stattgefunden hatte.

Die Erfindung wird anhand des folgenden Ausführungsbeispiels näher erläutert.

Beispiel

Als Ausgangsmaterial wurde ein Lanthanhexaboridpulver folgender Zusammensetzung

| La | 67,1 Gew.-% |
| B | 31,4 Gew.-% |
| O | 1,32 Gew.-% |
| C | 0,03 Gew.-% |

mit einer Teilchengröße von 3 µm und feiner verwendet. Dieses Pulver wurde durch Aufmahlen eines nach dem Borcarbid-Verfahren aus $La_2O_3$ und $B_4C$ hergestellten Pulvers erhalten. Als Kohlenstoff enthaltender Zusatz wurde ein handelsübliches, pulverförmiges Phenolformaldehydharz vom Novolak-Typ und als Borkomponente wurde amorphes Bor verwendet.

Das Lanthanhexaboridpulver wurde mit 3 Gew.-% Bor und einer Lösung des Novolak-Pulvers in Methanol in einer etwa 3 Gew.-% freiem Kohlenstoff entsprechenden Menge vermischt und der flüssige Brei solange an der Luft geknetet, bis praktisch das gesamte Lösungsmittel verdunstet war. Dann wurde dieses Pulvergemisch in einer Stahlmatrize unter einem Druck von 100 MPa zu Grünkörpern von 10 mm Durchmesser und 15 mm Höhe verpeßt. Die Grünkörper wurden in einem induktiv beheizten Graphitofen unter einem technischen Vakuum von etwa 133 Pa, stehend auf Graphitunterlagen, mit einer Aufheizgeschwindigkeit von etwa 10°C pro Minute auf 2180°C aufgeheizt und bei dieser Temperatur 20 Minuten gehalten.

Die so hergestellten Sinterkörper hatten eine Dichte von 4,38 g/cm³. Das Schliffbild zeigte ein praktisch porenfreies, homogenes, feinkörniges Gefüge mit Korngrößen deutlich kleiner 10 µm.

Die chemische Analyse des Sinterkörpers ergab folgende Werte:

| La | 62,8 Gew.-% |
| B | 33,3 Gew.-% |
| $C_{gesamt}$ | 3,65 Gew.-% davon $C_{frei}$ 2,55 Gew.-% |
| O | 0,079 Gew.-% |

Die Summe La+B+C beträgt 99,75 Gew.-%.

Unter der Annahme, daß die Differenz $C_{gesamt}-C_{frei}$ als Kohlenstoff vorliegt, der an $B_4C$ gebunden ist, errechnet sich der $B_4C$-Gehalt zu 5,06 Gew.-%. Der $LaB_6$-Anteil errechnet sich zu 92,14 Gew.-%, mit einem B/La-Verhältnis von 6,0.

Die theoretische Mischungsdichte kann berechnet werden nach der Formel

$$TD = \frac{100}{\dfrac{\text{Gew.-\% } LaB_6}{\text{Dichte } LaB_6} + \dfrac{\text{Gew.-\% } B_4C}{\text{Dichte } B_4C} + \dfrac{\text{Gew.-\% } C}{\text{Dichte } C}}$$

Werden folgende Dichten angenommen:

$LaB_6$ 4,72 g/cm³, $B_4C$ 2,51 g/cm³, C 2,25 g/cm³, dann errechnet sich die theoretische Dichte zu

$$TD = \frac{100}{\dfrac{92,14}{4,72} + \dfrac{5,06}{2,51} + \dfrac{2,55}{2,25}} = 4,41 \text{ g/cm}^3$$

Die gemessene Sinterdichte von 4,38 g/cm³ entspricht somit 99,3% TD.

Die Sinterkörper besitzen eine intensiv blauviolette Farbe und sind an feuchter Luft oder in Wasser stabil.

**Patentansprüche**

1. Stabile polykristalline Sinterkörper auf Basis von Lanthanhexaborid mit einer Dichte von mindestens 95% der theoretisch möglichen Dichte als Kathodenwerkstoffe, bestehend aus Lanthanhexaborid, Borcarbid und amorphem Kohlenstoff mit einem Anteil von Borcarbid und Kohlenstoff von 0,1 bis 10 Gew.-% mit einer Gesamtsumme von La+B+C von mindestens 99,0 Gew.-%, jeweils bezogen auf auf das Gesamtgewicht, mit einer homogenen Mikrostruktur mit mittleren Korngrößen von>10 µm, in der neben der kristallinen Lanthanhexaboridhauptphase Borcarbid und Kohlenstoff als getrennte, feinverteilte Phasen nachweisbar sind und die durch drucklose Sinterung von Pulvergemischen aus Lanthanhexaborid und Zusätzen von Gemischen aus einem Kohlenstoff enthaltendem Material und einer Borkomponente hergestellt worden sind.

2. Verfahren zur Herstellung der polykristallinen Sinterkörper gemäß Anspruch 1, durch drucklose Sinterung unter Mitverwendung von Sinterhilfsmitteln, dadurch gekennzeichnet, daß die Pulvergemische bestehend aus Lanthanhexaborid und Zusätzen von Gemischen aus einem Kohlenstoff enthaltendem Material und einer Borkomponente in gleichen Gewichtsmengen im Bereich von jeweils 0,25 bis 5 Gew.-%, berechnet als freier Kohlenstoff und als freies Bor, bezogen auf eingesetztes Lanthanhexaboridpulver, unter Bildung von Gründkörpern mit einer theoretisch möglichen Dichte von mindestens 50% vorgeformt und die vorgeformten Grünkörper anschließend unter Vakuum oder in Gegenwart einer inerten Gasatmosphäre unter einem Druck von 0,1 MPa auf Temperaturen von 2150° bis 2200°C erhitzt werden.

3. Verfahren nach Anspruch 2, dadurch gekennzeichnet, daß als Lanthanhexaboridpulver solche mit maximalen Teilchengrößen von 3 µm und feiner verwendet werden.

4. Verfahren nach Anspruch 2, dadurch gekennzeichnet, daß als Kohlenstoff enthaltendes Material ein Phenol-Formaldehyd-Kondensationsprodukt und als Borkomponente amorphes Bor verwendet werden.

**Revendications**

1. Objets frittés polycrystallins stables à base d'hexaborure de lanthane, d'une densité d'au moins 95% de la densité théoriquement possible, en tant que matériaux de cathodes, objets qui sont formés d'hexaborure de lanthane, de carbure de bore et de carbone amorphe avec une proportion pondérale de carbure de bore et de carbone de 0,1 à 10% et une proportion pondérale globale de La+B+C d'au moins 99,0%, proportions rapportées à leur poids total, qui ont une microstructure homogène avec une dimension moyenne des grains inférieure à 10 µm, dans laquelle en plus de la phase principale cristallisée d'hexaborure de lanthane on peut montrer la présence de carbure de bore et de carbone en phases séparées finement divisées, et que l'on fabrique par un frittage sans pression de mélanges pulvérulents d'hexaborure de lanthane additionnés de mélanges d'une matière carbonée et d'un composant de bore.

2. Procédé de fabrication des objets frittés polycristallins selon la revendication 1 par frittage sans pression en présence d'adjuvants de frittage, procédé caractérisé en ce que l'on forme, avec le mélange pulvérulent d'hexaborure de lanthane additionné d'un mélange d'une matière carbonée et d'un composant de bore dans les mêmes proportions pondérales, chacune de 0,25 à 5%, en carbone libre et bore libre, du poids de la poudre d'hexaborure de lanthane, des corps crus ayant une densité théoriquement possible d'au moins 50%, corps que l'on chauffe ensuite entre 2150 et 2200°C sous vide ou en présence d'un gaz inerte sous une pression de 0,1 MPa.

3. Procédé selon la revendication 2, caractérisé en ce que la poudre d'hexaborure de lanthane est en particules d'une dimension maximale de 3 µm et moins.

4. Procédé selon la revendication 2, caractérisé en ce que l'on utilise comme matière carbonée un produit de condensation phénol-formaldéhyde et comme composant de bore du bore amorphe.

**Claims**

1. Stable polycrystalline sintered bodies based on lanthanum hexaboride which have a density of at least 95% of the theoretically possible density as cathode materials, composed of lanthanum hexaboride, boron carbide and amorphous carbon containing a proportion of boron carbide and carbon of 0.1 to 10% by weight with a total sum of La+B+C of at least 99.0% by weight, in each case based on the total weight, having a homogeneous microstructure with a mean grain size of <10 µm, in which, in addition to the crystalline lanthanum hexaboride main phase, boron carbide and carbon can be detected as separate, finely divided phases and which are produced by pressureless sintering of powder mixtures of lanthanum hexaboride and additives of mixtures of a carbon-containing material and a boron component.

2. Process for producing the polycrystalline sintered bodies according to Claim 1, by pressureless sintering with concomitant use of sintering aids, characterized in that the powder mixtures composed of lanthanum hexaboride and additives of mixtures of a carbon-containing material and a boron component in equal quantities by weight in the range from, in each case, 0.25 to 5% by weight, calculated as free carbon and free boron, based on the lanthanum hexaboride powder used are preformed to form green bodies having a theoretically possible density of at least 50% and the preformed green bodies are then heated to temperatures of 2,150° to 2,200°C under vacuum or in the presence of an inert gas atmosphere under a pressure of 0.1 MPa.

**EP 0 204 962 B1**

3. Process according to Claim 2, characterized in that as lanthanum hexaboride powders, those having a maximum particle size of 3 μm and finer are used.

4. Process according to Claim 2, characterized in that a phenol-formaldehyde condensation product is used as carbon-containing material and amorphous boron as boron component.

6